# EUROPEAN PATENT SPECIFICATION

(11) **EP 4 059 311 B1**
(45) Date of publication and mention of the grant of the patent: **31.01.2024**
(21) Application number: 20825026.6
(22) Date of filing: 13.11.2020
(51) Int. Cl.: H04W 76/45, H04L 12/18, H04W 4/10, H04W 84/08, H04L 45/247, H04L 65/1083, H04L 65/1095, H04L 65/4061, H04W 88/06

(54) **DUAL FALLBACK HARDENED VOIP SYSTEM WITH SIGNAL QUALITY MEASUREMENT**
DUAL-FALLBACK-GEHÄRTETES VOIP-SYSTEM MIT SIGNALQUALITÄTSMESSUNG
SYSTÈME VOIP DURCI À DOUBLE REPLI AVEC MESURE DE QUALITÉ DE SIGNAL

(30) Priority: 13.11.2019 US 201962934920 P
(43) Date of publication of application: 21.09.2022
(73) Proprietor: Clever Devices Ltd., Woodbury, NY 11797 (US)
(72) Inventor: BOCKRATH, Philip B., Woodbury, NY 11797 (US); CURTIS, Darryl G., Woodbury, NY 11797 (US); DENNIS, Paul A., Woodbury, NY 11797 (US)
(74) Representative: Patentanwälte Bauer Vorberg Kayser
(86) International application number: PCT/US2020/060485
(87) International publication number: WO 2021/097263

(56) References cited:
- US-B2- 8 676 243
- US-B2- 10 298 384

## Description

This application claims priority to U.S. Provisional Application 62/934,920 entitled Hardened VoIP System that was filed on November 13, 2019.

### FIELD OF THE INVENTION

The present invention relates generally to fault tolerant mobile communication systems, and specifically relates to hardened voice over IP (VoIP) systems with push to talk (PTT) functionality that integrate into existing land mobile radio (LMR) systems.

### BACKGROUND OF THE INVENTION

LMR systems are wireless communications systems generally intended for use by terrestrial users in vehicles or on foot. Such systems are often used by emergency first responder organizations such as police, fire and ambulance services, public works organizations, dispatched services such as taxis, and companies with large vehicle fleets or numerous field staff. LMR systems are often independent but can be connected to other fixed systems such as the public switched telephone network (PSTN) or cellular networks (also called cellular communications systems).

Radio over Internet Protocol (RoIP) is like VoIP but augments two-way radio communications rather than telephone calls. With RoIP, at least one node of a network is a radio (or a radio with an IP interface device) connected via IP to other nodes in the radio network. The other nodes can be two-way radios, but can also be dispatch consoles, either traditional (hardware) or modern (software on a PC), plain old telephone service (POTS) telephones, softphone applications running on a computer such as a smartphone or some other communications device accessible over IP. RoIP has been deployed over private networks as well as the Internet. RoIP has shown to be useful in land mobile radio systems used by public safety departments and utility fleets spread over a broad geographic area. Like other centralized radio systems such as trunked radio systems, issues of delay or latency and reliance on centralized infrastructure can be impediments to adoption by public safety agencies.

Examples of previous attempts to integrate LMR with VoIP include U.S. Patent No. 8,145,262 issued to Martinez that claims to disclose a multimode LMR and a method of communicating LMR content using an LMR device. The Martinez LMR system includes an LMR communication portion and a cellular data network communication portion.

U.S. Patent No. 8,169,983 issued to Janky claims to disclose a transcoder architecture and method for transcoding in LMR systems. The Janky LMR system includes a first communication site configured to communicate using a first LMR communication protocol and a second communication site configured to communicate using a second LMR communication protocol. The Janky LMR system further includes a transcoder configured to receive LMR content from the first communication site communicated using the first LMR communication protocol and digitally convert the LMR content to the second LMR communication protocol to be communicated to the second communication site.

U.S. Patent No. 8,634,799 issued to Economy claims to disclose an incident commander computing device that dynamically reconfigures subscriber unit usage of radio access networks by first identifying, based at least on a type of incident occurring within a particular geographic area, a first incident response group having a first higher priority for responding to the incident and a second incident response group having a second lower priority for responding to the incident, then identifying a first higher priority radio access network having a sufficient coverage level across the particular geographic area and a second lower priority radio access network having a sufficient coverage level across the particular geographic area, and finally assigning the first incident response group to the first higher priority radio access network and assigning the second incident response group to the second lower priority radio access network.

U.S. Patent No. 8,676,243 issued to Blanco claims to disclose a communication system that provides dual-watch and multi-watch capability for group PTT services where incoming PTT calls are prioritized and played out in accordance with prioritization protocols. In the Blanco system a user of multiple communication devices can hear received audio traffic being played out in accordance with the priority assigned to the group call and the priority assigned to the communication device, and numerous calls can be simultaneously received and managed.

U.S Patent Nos. 10,298,384, which is considered the closest prior art, and 10,044,498 issued to Bockrath claims to disclose a hardened VoIP system that includes secure push-to-talk voice functionality. Bockrath claims that through the addition of encryption, authentication, user filtering, and integration with new and existing LMR systems, a secure voice platform ensures malicious software, unauthorized access and brute force security attacks will not compromise the voice communications of the system. The Bockrath VoIP system is engineered to ensure graceful system degradation in the event of maintenance activities, natural disasters and failure modes.

### SUMMARY OF THE INVENTION

A hardened VoIP system is presented that includes secure PTT voice functionality. Through the addition of encryption, authentication, user filtering, and integration with new and existing LMR systems, a secure voice platform ensures malicious software, unauthorized access and brute force security attacks will not compromise the voice communications of the system. The VoIP system is engineered to ensure graceful system degradation in the event of maintenance activities, natural disasters and failure modes. The hardened VoIP system offers the functions of a LMR trunking system while utilizing broadband connections. Private calls, group calls, Emergency Alarms with covert monitoring capability, scanning and priority scanning may be incorporated into the system. The system includes a VoIP controller that serves as a trunking controller, manages available VoIP based conference bridges, and assigns them as needed to the parties involved in each voice call.

The system allows for standard LMR functionality and the ability for supervisor tablets and smartphones to participate in and monitor VoIP calls between the dispatch center, mobile workforce, and revenue vehicles. The system also provides supervisor tablets and smart phones the capability to scan talk groups in active calls, setup calls to other users, including closed microphone users, without dispatch or other third-party intervention using the private call feature.

The hardened VoIP system provides an integrated mobile product that allows the system to gracefully fallback to the LMR infrastructure in the event of a broadband network outage. The integration of hardened VoIP and LMR allows new or existing LMR capital resources to be used to bridge various radio technologies and further allows switching algorithms to seamlessly and gracefully degrade from hardened VoIP to LMR without user intervention in the event of a broadband outage.

In an embodiment of the invention there is a mobile device having a first primary operational state, a second primary operational state, a first fallback state, and a second fallback state, the mobile device configured in the first primary operational state to receive via a cellular communications system a VoIP status signal from a VoIP controller, receive from a first land mobile radio system a first Land Mobile Radio (LMR) status signal, and provide VoIP communication over the cellular communications system; in the second primary operational state to receive via the cellular communications system the VoIP status signal from the VoIP controller, receive from a second land mobile radio system a second LMR status signal, and provide VoIP communication over the cellular communications system; in the first fallback state to provide voice communication over the first land mobile radio system; in the second fallback state to provide voice communication over the second land mobile radio system; and to transition from the first primary operational state to the first fallback state upon failing to receive the VoIP status signal from the controller; to transition from the second primary operational state to the second fallback state upon failing to receive the VoIP status signal from the VoIP; and to transition from the first primary operational state to the second primary operational state upon failing to receive the first LMR status signal.

An embodiment of the invention includes a mobile device that is configured in the first primary operational state to receive from the second land mobile radio system the second LMR status signal.

An embodiment of the invention includes a mobile device is configured to transition from the second primary operational state to the first primary operational state upon receiving the first LMR status signal.

An embodiment of the invention includes a mobile device that is configured in the first primary operational state to receive the first LMR status signal following a verification of receipt of the VoIP status signal from the controller and in the second primary operational state to receive the second LMR status signal following the verification of receipt of the VoIP status signal from the VoIP controller.

An embodiment of the invention includes a mobile device that is configured to determine a signal quality of the cellular communications system with a Session Initiation Protocol/Real-Time Transport Control Protocol (SIP/RTCP), and transition from the first primary operational state to the first fallback state upon the signal quality of the cellular communications system passing a predetermined threshold.

An embodiment of the invention includes a mobile device wherein the predetermined threshold is a threshold of at least one of packet loss, latency, and jitter buffer depth.

An embodiment of the invention includes a mobile device wherein the mobile device is configured to use a measurement of at least one of packet loss and latency in determining the signal quality.

An embodiment of the invention includes a mobile device wherein the mobile device is configured to transition from the first primary operational state to the first fallback state upon the signal quality passing the predetermined threshold when the mobile device is receiving the VoIP status signal from the controller.

An embodiment of the invention includes a mobile device wherein the mobile device further includes a first auxiliary data state and a second auxiliary data state ; the mobile device configured in the first auxiliary data state to receive via an auxiliary data communications system an auxiliary data status signal from the controller, receive from the first land mobile radio system the first LMR status signal, and provide VoIP communication over the auxiliary data communications system; in the second auxiliary data state to receive via the auxiliary data communications system the auxiliary data status signal from the controller, receive from the second land mobile radio system the second LMR status signal, and provide VoIP communication over the auxiliary data communications system; to transition from the first auxiliary data state to the first fallback state upon failing to receive the auxiliary data status signal from the controller; to transition from second auxiliary data state to the second fallback state upon failing to receive the auxiliary data status signal from the controller; and to transition from the first auxiliary data state to the second auxiliary data state upon failing to receive the first LMR status signal.

An embodiment of the invention includes a mobile device wherein the mobile device is further configured to transition from the first primary operational state to first auxiliary data state upon failing to receive the VoIP status signal and receiving the auxiliary data status signal; and to transition from the first primary operational state to first fallback state upon failing to receive the VoIP status signal and failing to receive the auxiliary data status signal.

Embodiments of the invention also include a system for providing hardened VoIP and land mobile radio communication services to mobile devices, the system comprising the previously recited mobile device.

An embodiment of the invention includes a system wherein the system comprises a VoIP controller, wherein the VoIP controller is configured to maintain a VoIP database, the database having identifiers associating the mobile device in both the first primary operational state and second primary operational state with the cellular communications system, and associating the mobile device in both the first auxiliary data state and the second auxiliary data state with the auxiliary data communications system.

An embodiment of the invention includes a system wherein the cellular communications system and auxiliary data communications system include a network pairing selected from a group consisting of two of 3G, 4G, GSM, LTE, CDMA, and 5G NR.

An embodiment of the invention includes a system wherein the VoIP controller is configured to determine a signal quality of the cellular communications system with a Session Initiation Protocol/Real-Time Transport Control Protocol (SIP/RTCP), and transmit a fallback command to the mobile device upon the signal quality passing a predetermined threshold.

An embodiment of the invention includes a system wherein the mobile device is configured to transition from the first primary operational state to the first fallback state upon receipt of the fallback command from the VoIP controller.

An embodiment of the invention includes a system wherein the system is configured to utilize a measurement of at least one of packet loss and latency in determining the signal quality.

An embodiment of the system includes a system wherein the mobile device is configured to verify receipt of the VoIP status signal from the controller at the expiration of a timer having a duration; at least one of the VoIP controller and the mobile device is configured to determine a signal quality of the cellular communications system with a Session Initiation Protocol/Real-Time Transport Control Protocol (SIP/RTCP); and the duration of the timer decreases upon the signal quality passing a predetermined threshold.

An embodiment of the system includes a system wherein the mobile device is configured to transmit a message to the VoIP controller upon the transition of the from the first primary operational state to the second primary operational state indicating the mobile device has secondary voice access.

In an embodiment of the invention there is a VoIP controller having a first primary operational state, a second primary operational state, a first fallback state, and a second fallback state, the VoIP controller configured in the first primary operational state to receive via a cellular communications system a first VOIP heartbeat signal from a mobile device, receive a first Land Mobile Radio (LMR) status signal associated with a first land mobile radio system from the mobile device, maintain a database with a first identifier associating the first mobile device with the cellular communications system and a second identifier associating the first mobile device with the first land mobile radio system; in the second primary operational state to receive via the cellular communications system the first VOIP heartbeat signal from the mobile device, receive a second LMR status signal associated with a second land mobile radio system from the mobile device, maintain the database with the first identifier associating the first mobile device with the cellular communications system and the second identifier associating the first mobile device with the second land mobile radio system; in the second primary operational state to receive via a cellular communications system the first VOIP heartbeat signal from the mobile device, receive via a second land mobile radio system a second LMR status signal, transmit a first status control signal to the first mobile device, and maintain the database with a first identifier associating the first mobile device with the cellular communications system and a second identifier associating the first mobile device with the second land mobile radio system; in the first fallback state to monitor a channel of the first land mobile radio system associated with the mobile device; in the second fallback state to monitor a channel of the second land mobile radio system associated with the mobile device; to transition from the first primary operational state to the first fallback state upon failing to receive the first VoIP heartbeat signal from the mobile device; and to transition from the second primary operational state to the second fallback state upon failing to receive the first VoIP heartbeat signal from the mobile device.

An embodiment of the invention includes a controller wherein the controller is configured to transition from the first primary operational state to the second primary operational state upon receipt of a first message indicating the mobile device has secondary voice access.

An embodiment of the invention includes a controller wherein the controller is configured to determine a signal quality of the cellular communications system with a Session Initiation Protocol/Real-Time Transport Control Protocol, and transition from the first primary operational state to the first fallback state upon the signal quality passing a predetermined threshold.

Embodiments of the invention also include a system for providing hardened VoIP and land mobile radio communication services to mobile devices, the system comprising the previously recited controller.

Embodiments, features and advantages of the invention concerning a mobile device, a controller or a system for providing hardened VoIP and land mobile radio communication services to mobile devices, respectively, also apply to the respective other categories of the mobile device, the controller or the system for providing hardened VoIP and land mobile radio communication services to mobile devices.

### BRIEF DESCRIPTION OF THE DRAWINGS

Preferred embodiments are described with reference to the following drawings, wherein:
Figure 1 illustrates an example of a hardened VoIP system.
Figure 2 illustrates an example of a VoIP solution for mobile devices.
Figure 3 illustrates an improved VoIP solution for mobile devices.
Figure 4 illustrates a method of a VoIP controller registering client devices and updating talk group databases.
Figure 5 illustrates an example of data that may be found in a talk group portion of the VOIP database.
Figure 6 is a flow diagram of a client device transitioning between numerous communication methods and systems.
Figure 7 is the first part of a flow diagram of a system with primary, secondary, and tertiary fallback modes of operation.
Figure 8 is the second part of the flow diagram of figure 7.
Figure 9 is the third part of the flow diagram of figure 7.
Figure 10 is the fourth part of the flow diagram of figure 7.
Figure 11 is s chart illustrating the various states configuration states of the system of figure 7.
Figure 12 illustrates an example of a hardened VoIP system.

### DETAILED DESCRIPTION

The present invention may be used with any type of hardened communication system and is particularly suited for police, fire, and transit systems. However, for descriptive purposes, the present invention will be described in use with a municipal bus system.

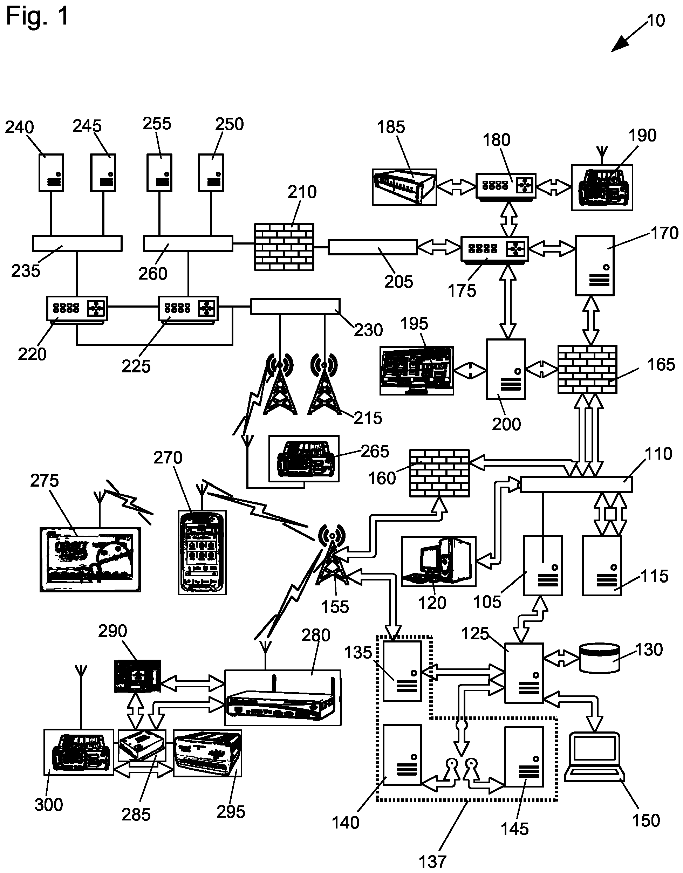

Figure 1 shows a schematic of a hardened VoIP communication system **10** that includes a server **105** connected to a switch **110** that relays data to a data communication controller **115.** Users may configure and/or monitor the system using client devices **120** which access the switch **110.** The server **105** also communicates with the VoIP 1 controller **125** that receives and stores data from a VoIP database **130.** The controller **125** is configurable to transmit data to both a local VoIP switch **135,** a hosted VoIP Switch **140,** and a hosted conference bridge **145.** The local VoIP switch **135,** the hosted VoIP switch **140,** and the hosted conference bridge **145** are all session devices **137** that create SIP RTP sessions with mobile devices. A terminal **150** may be used to access and/or configure the VoIP controller **125.**

The VoIP switches (**135, 140**) are configured to communicate with commercial cellular towers **155** to transmit communications in an LTE, WiMax, EvDO UMTS, HSPA or similar format to distant communication devices. The cellular towers **155** are part of a cellular communications system.

In addition to communicating with the cellular towers **155** via the VoIP controller **125,** the server **105** is configured to also be able to communicate with the cellular towers **155** via the switch **110** through a firewall **160.** In one example of the system, the switch **110** transmits data to the cellular towers **155** via an access point name gateway while in alternative embodiments an independent internet service provider is utilized to transmit data to the cellular towers.

In addition to communicating through cellular data formats, the switch **110** may transmit communications data through a firewall **165** to a server **170,** such as a Zetron ACOM EVO server, that relays the communication to a dispatch switch **175** and a router panel **180** such as the Telex IP-224 Dual IP Remote Adapter Panel. The router panel **180** is connected by 4 wire audio to an RoIP rack **185** with Ethernet or cellular data connectivity and also via 4 wire audio to auxiliary LMR radios **190.** Dispatchers may access the system through a console client **195** such as a Zetron ACOM EVO Client that communicates with the dispatch switch **175** via a dispatcher server **200.**

A DMZ switch **205** is connected to the dispatch switch **175** and acts as a demilitarized zone, or perimeter network, that contains and exposes the system's external-facing services to a larger untrusted network. In addition to the DMZ switch **205,** the radio dispatch functionality is also protected by another firewall **210.**

The land mobile radio system, which also may be called a first land mobile radio system, includes LMR towers **215** that communicate with first and second routers (**220, 225**) via a backhaul switch **230.** The first router **220** communicates with a LAN switch **235** and receives communications from VMS servers (**240, 245**). The second router **225** communicates with the DMZ switch **205,** a gateway GPRS Support Node **250** and a PDG **255** via a second LAN switch **260.**

By transmitting via both the cellular towers **155** and the LMR towers **215,** the system can communicate with a variety of devices including LMR based devices **265** such as the Motorola APX6500. The system can communicate with bi-functional devices **270** such as the Motorola LEX L10 that has LTE connectivity as well as LMR connectivity. Additionally, the bi-functional devices **270** may be used to extend connectivity to Wi-Fi devices **275** that are closely located with the bi-functional devices **270.** The system may also communicate with cellular exclusive devices **280** such as the Digi Router WR44, a commercial grade cellular to Wi-Fi converter. Through a Universal Radio Logic Controller **285** (also called a URLC) and proprietary onboard hardware **290,** the cellular exclusive device **280** provides data to a vehicle logic unit **295** that delivers processing power and communication with other on-board technologies and may provide real-time access to schedule, route and traffic information, on-time performance data, and messages to and from dispatch. The Universal Radio Logic Controller **285** and the vehicle logic unit **295** can also be connected to an LMR Radio **300** that provides redundancy in the event of a malfunction in the cellular towers **155** or the cellular exclusive device **280.** Mobile devices include the bi-functional devices **270,** the cellular exclusive device **280,** the Universal Radio Logic Controller **285,** the proprietary onboard hardware 290, the vehicle logic unit **295** and the LMR Radio **300.**

The VoIP controller **125** of the illustrated system is a hardened VoIP controller and is configured to provide VoIP encryption, authentication, authorization, and accounting in a bandwidth efficient manner for the system. The VoIP controller **125** is shown as a single device in figure 1, however it should be appreciated that multiple geographically redundant VoIP channel controllers may be utilized in exemplary embodiments of the system such that an occurrence (fire, flood, power outage, etc.) at a single location would not disrupt communications in the overall system.

The RoIP rack **185** performs 4 wire LMR to VoIP conversions and has Ethernet or cellular connectivity. While there is a single RoIP rack **185** shown in Figure 1, in an exemplary embodiment there is one module per talk group such that multiple RoIP racks may be utilized by the system. In the event of an RoIP rack failure, the multi-rack system is configured to automatically shift talk groups over to any available module on the other RoIP racks to ensure seamless degradation of the system upon a component failure.

The console client **195** is interfaced with the RoIP rack **185** and allows dispatchers to access specific talk groups, and or reconfigure specific talk groups as needed. CSSI, DFSI, and AFSI links may also be used to interface to LMR radio infrastructure.

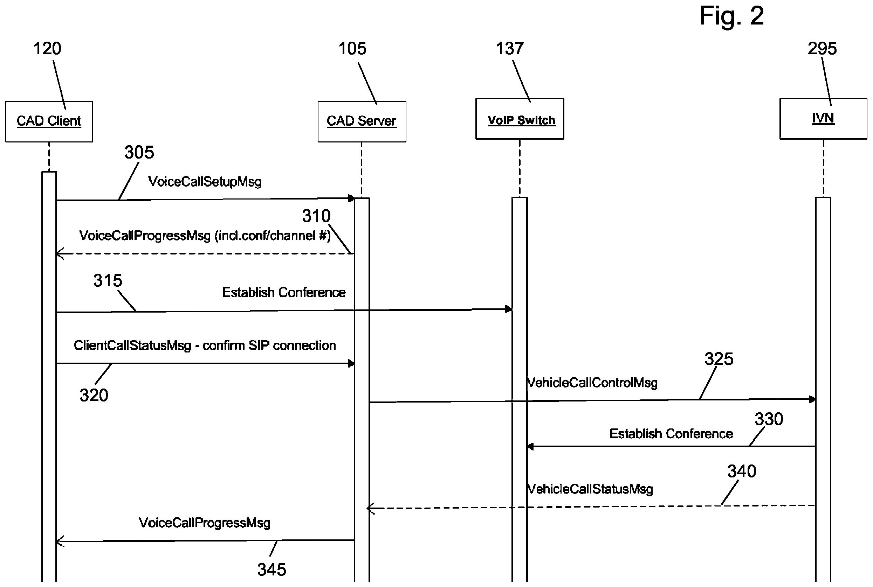

Figure 2 illustrates an example of a call setup from a client device **120** to a vehicle with a vehicle logic unit **295.** The client **120** sends a setup message **305** to the server **105** that responds with a call progress message **310** that includes conference and channel numbers. Using the received information, the client device **120** establishes a conference bridge **315** to the session device **137** and transmits a call status confirmation **320** to the server **105** that relays a control message **325** to the vehicle logic unit **295** that in turn establishes a conference **330** with the preselected session device **137** while transmitting a confirmation **335** to the server **105.** The server **105** then provides a progress message **340** to the client device **120.**

While the system of Figure 2 provides mobile VoIP capabilities there are a few issues with the system. In particular, the system requires a large amount of system bandwidth (e.g., 12 Mbps for a 350-vehicle call) due to iLBC vocoder requirements. Additionally, the system loses operability if the server **105** is taken offline or if the system is placed into administrative fall back.

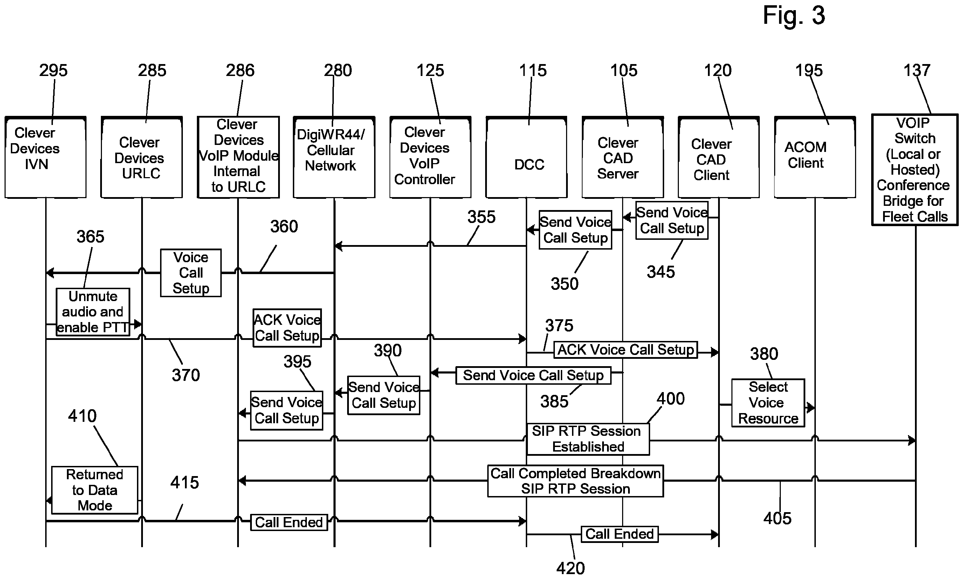

Figure 3 illustrates an improved example of a VoIP call setup from a client device **120** client to a vehicle with a vehicle logic unit **295.** In the illustrated example, the client device **120** sends a setup message **345** to the server **105** which relays the setup request **350** to the data communications controller **115.** The data communications controller **115** transmits a setup signal **355** to the cellular exclusive devices **280** such as the Digi Router WR44 on board a vehicle. The cellular exclusive device **280** relays the setup request **360** to the vehicle logic unit **295** via the universal radio logic controller **285.** In response to the setup request, the vehicle logic unit **295** sends a configuration communication **365** to the universal radio logic controller **285** to unmute audio and enable push-to-talk communication. The vehicle logic unit **295** sends an acknowledgment **370** to the data communications controller **115** wherein the voice call setup is relayed **375** to the client device **120** via the server **105.** The client device **120** selects **380** the voice resource for the console client **195.** The server **120** relays (**385, 390**, and **395**) a VoIP call setup request to the Universal Radio Logic Controller **285** and a VoIP module **286** with Universal Radio Logic Controller **285.** The VoIP module **286** establishes at **400** a session initiation protocol (SIP) real-time protocol (RTP) session with one of the session devices **137** (local VoIP switch **135,** the hosted VoIP switch **140,** or the hosted conference bridge **145**). Upon the completion **405** of the session (either intentionally or unintentionally) the Universal Radio Logic Controller **285** signals **410** the vehicle logic unit **295** which relays (**415, 420**) the termination of the session to the client device **120** via the data communication controller **115.**

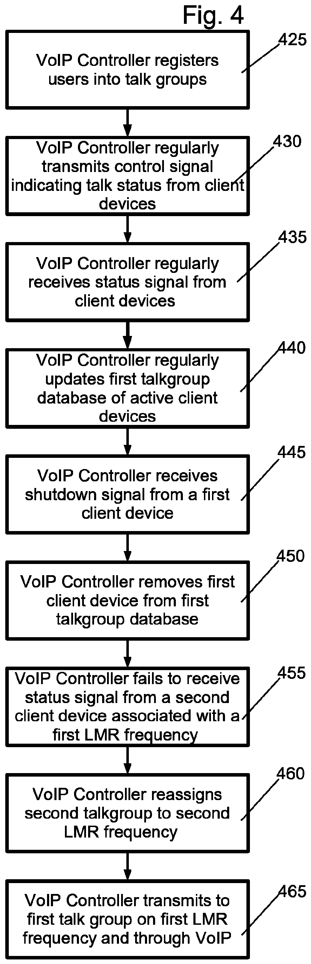

Figure 4 illustrates an example of a registration method and graceful fallback in the event of a system deterioration. In step **425,** the VoIP controller receives an initiation communication from a user client device and assigns the device to a talk group (fire talk group, transit talk group, police talk group, etc.). At regular intervals, at step **430,** the VoIP controller transmits control signals to the client devices. The regular flow of transmissions from the VoIP controller to the client devices allows the Universal Mobile Access Radio Link Control (URLC) (also called Universal Radio Logic Controllers **285**) devices on the client devices to quickly determine if there has been a deterioration in the cellular based communication. In addition to regularly transmitting control signals or status signals in step **430s,** the VoIP controller is configured to regularly receive status updates from client devices at step **435.** These status signals received from the client devices may be referred to as VoIP heartbeat signals. Similar to the control signal from the VoIP controller allowing the client devices to determine if there has been a breakdown in VoIP communications, the VoIP heartbeat signals from the client devices allow the VoIP controller to determine which devices are active. In an example of the invention, the control signals and status signals are both of small file size such that the cellular data usage is minimized while the system is in standby mode.

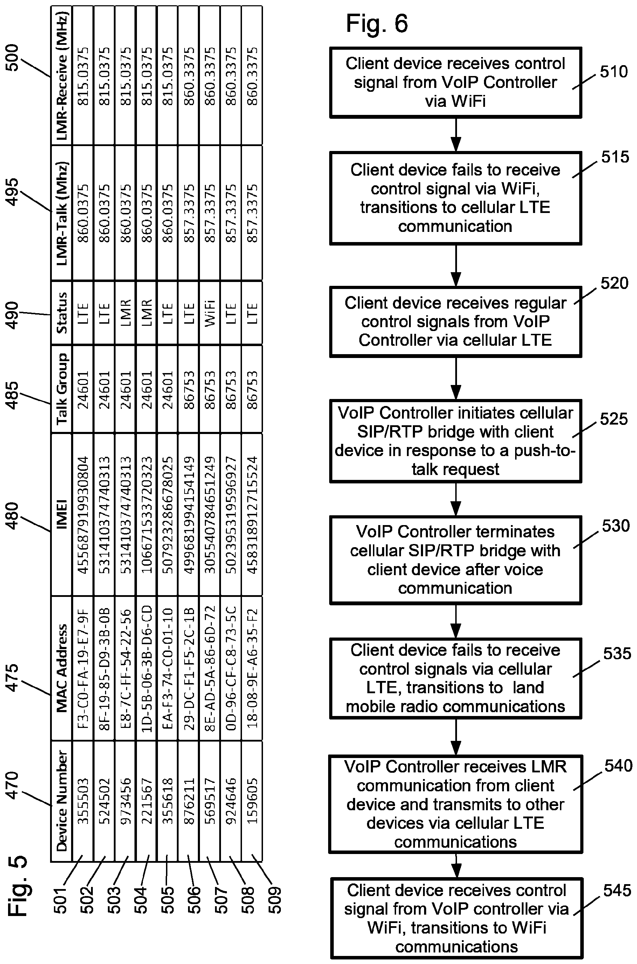

At step **440,** the VoIP controller updates the database associated with active client database. Shown in Figure 5 are examples of some of the information that may be associated with the various clients in the active client database. In step **445,** the VoIP controller receives an intentional shutdown signal from a first client device, and in step **450** the VoIP controller removes the first client device from the active client database.

In step **455,** the VoIP controller fails to receive a regular status signal from a second client device. Reasons for possible loss in signal include the second client device moving outside of a zone having cellular data coverage, a problem with a cellular tower, or a malfunction with the cellular data transmitter associated with the second client device. Before the cellular data communication failure, LMR communication frequencies were associated with the second client device and stored by both the second client device and the VoIP controller. With the cellular breakdown, the predetermined LMR frequencies are assigned to the second client device, and at step **460** the talk groups unassociated with the second client device are reassigned LMR communication frequencies. At step **465,** in response to a push-to-talk signal, the VoIP controller facilitates a voice communication to the client devices in the first talk group. While the second client device receives communications via LMR, the other devices in the talk group may receive the communication via cellular data, or even local Wi-Fi. In an exemplary embodiment of the invention, the transition from cellular LTE to LMR communications occurs seamlessly and without any manual configuration by the users of the client devices. In one embodiment of the invention, the system initiates the transition from LTE to LMR communications upon a detection that the LTE signal quality has fallen below a non-zero predetermined threshold. In another embodiment, the predetermined threshold includes a percentage of packet loss or a duration of signal latency. In yet another embodiment, the predetermined threshold is determined based on metric that factors both packet loss and latency.

Figure 5 illustrates some of the information that is stored by the VoIP controller in the active client database (also called the VoIP database). With each client device there may be stored a unique device identifier **470** along with a MAC address identifiers **475** associated with Wi-Fi communications and an IMEI identifiers **480** associated with cellular communications. The MAC address identifiers **475** and IMEI identifiers **480** are examples of a first identifier associating the first mobile device with the cellular communications system. The talk group identifiers **485** associated with each group is stored in the active client database along with the currently utilized communication form identifiers **490** and the talk **495** and receive **500** frequency identifiers for backup LMR communications. The talk **495** and receive **500** frequency identifiers are examples of a second identifier associating the first mobile device with the first land mobile radio system. If the system transitions to a second primary operational state, the talk **495** and receive **500** frequency identifiers become third identifiers associating the first mobile device with the second land mobile radio system. In the example of a system with dual fallback LMR system, multiple talk and receive frequencies may be stored in the VoIP database for the mobile device. Upon a first fallback, the VoIP controller would monitor a channel (such as the voice frequency identifier **495** of the first land mobile radio system associated with the mobile device, and in the second fallback the VoIP controller would monitor a channel of the second land mobile radio system associated with the mobile device.

Client devices **501-505** are listed as being in the first talk group while client devices **506-509** are in the second talk group. Most of the client devices (**501, 502, 505, 506, 508,** and **509**) are utilizing cellular communications protocols while two devices (**503, 504**) are communicating via LMR and one device **507** is communicating via a Wi-Fi link. The forms of communication in the database are not static and are expected to change. As an example, a client device **507** may be associated with a fire truck parked at a firehouse that communicates with the VoIP controller via the firehouse Wi-Fi. When the firetruck leaves the firehouse, the client device **507** automatically switches over to a cellular communication protocol once the firehouse's Wi-Fi access point is out of range. Should cellular and Wi-Fi communications be unavailable, the client device **507** on the firetruck would automatically begin to communicate using the predetermined land mobile radio frequencies (857.3375 and 860.3375 MHz). In an exemplary embodiment of the invention, the transition from Wi-Fi to cellular data to LMR and back is done automatically without any client user interaction and provides seamless fallback functionality such that a user may communicate using numerous different methods (Wi-Fi, LMR, satellite, etc.) without the user being aware that a change has occurred.

Figure 6 illustrates an example of a client device gracefully transitioning between multiple communication methods. At step **510,** the client device regularly receives a control signal from a VoIP controller via Wi-Fi while the client device is in standby mode. The control signal may be referred to as a status control signal. A SIP/RTP bridge could be established by the VoIP controller upon a request to talk by a user. At step **515,** the URLC aboard the client device detects that the control signal has not been received and transitions the client device to cellular communications. At step **520,** the client device is once again in standby mode and at step **525** a SIP/RTP bridge is created between the client device and the VoIP controller in response to a voice communication. At step **530,** the SIP/RTP bridge is terminated, and at step **535** the client device fails to receive the control signal via cellular or Wi-Fi communications, so the client device transitions to land mobile radio communications. At step **540,** the VoIP controller receives a LMR communication from the client device, and via cellular communications, establishes a SIP/RTP bridge with the other members of the client device's talk group. At step **545,** the client device receives the control signal via Wi-Fi, and the LMR transmitter on the client device is deactivated.

### System with Multiple Fallback Modes

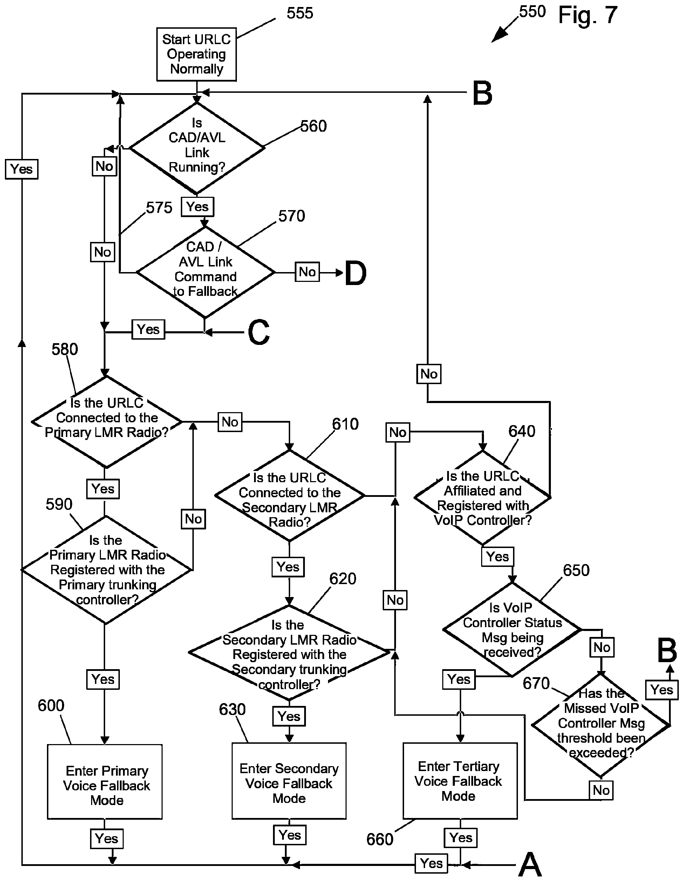

Figures 7 through 10 illustrate an example of a hardened mobile communication system **550** with a primary fallback mode of operation, a secondary fallback mode of operation, and a tertiary fallback mode of operation. The system **550** is started at step **555** where the URLC, the Universal Mobile Access Radio Link Control, is started and is operating normally. At step **560,** the system checks if the CAD/AVL link between the on vehicle URLC and controller is running. If the CAD/AVL link is running, the system then proceeds to step **570** where a check is made to see if the controller has issued a fallback command to the mobile device which would result in system proceeding to step **580.** The system may move into various states that are referred to as operational states, primary operational states, fallback states, auxiliary data states. The components of the system (e.g., mobile devices, VoIP controllers) also enter these states. Upon receipt of the fallback command from the VoIP controller, the mobile device begins the process of transitioning from the first primary operational state to the first fallback state. If the CAD/ACL link is not available in step **560** (such as when there is a VoIP service disruption), the system immediately proceeds to step **580** to begin the appropriate fallback. At step **580,** the URLC checks to see if a primary land mobile radio is available. This check may include determining if the first LMR status signal has been received from the primary land mobile radio. If so, the system proceeds to step where the system determines if the available LMR is registered for communications on the primary trunking controller. If so, the system proceeds to step **600** and enters a primary fallback voice mode. This mode may be referred to as the first fallback state. Similarly, the VoIP controller, transitions from the first primary operational state to the first fallback state upon failing to receive the first VoIP heartbeat signal from the mobile device.

If either step **580** or step **590** are negative, the system proceeds to step **610** where the URLC checks to see if a secondary land mobile radio is available. The secondar land mobile radio is referred to as a second land mobile radio system. This step may include determining if a second LMR status signal has been received from the second land mobile radio. Like step **580,** if the secondary land mobile radio is available the system then proceeds to step **620** where the system determines if the available LMR is registered for communications on the secondary trunking controller. If so, the system proceeds to step **630** and enters secondary voice fallback mode. This may be referred to as the second fallback state.

If either step **610** or **620** is negative, the system then proceeds to steps associated with a tertiary fallback mode. At step **640,** the system checks if the on vehicle URLC is affiliated with and registered a VoIP controller. If the URLC is not affiliated with a VoIP controller, the system then reverts to step **560** to again cycle through checking the availability of the CAD/AVL, primary LMR, and secondary LMR. If the URLC is affiliated with and registered with a VoIP controller, a check for status messages from the VoIP controller is made at step **650.** If the status messages are received from the VoIP (i.e., the controller and URLC are in communication), the system then proceeds to step **660** and enters the tertiary fallback mode. If the check for status messages from the VoIP controller indicates that no messages are being received, the system proceeds to step **670** where a check is made on the number of missed messages, or the length of time that no controller status messages have been received. If the predetermined threshold of time, or missed messages has been exceed, the system loops back to step **640** and continues in a process loop until either a status messages is received at step **650** or the predetermined threshold is exceeded in step **670.** If the predetermined threshold is exceeded in step **670,** the system reverts to the step **560** to again cycle through checking the availability of the CAD/AVL, primary LMR, and secondary LMR.

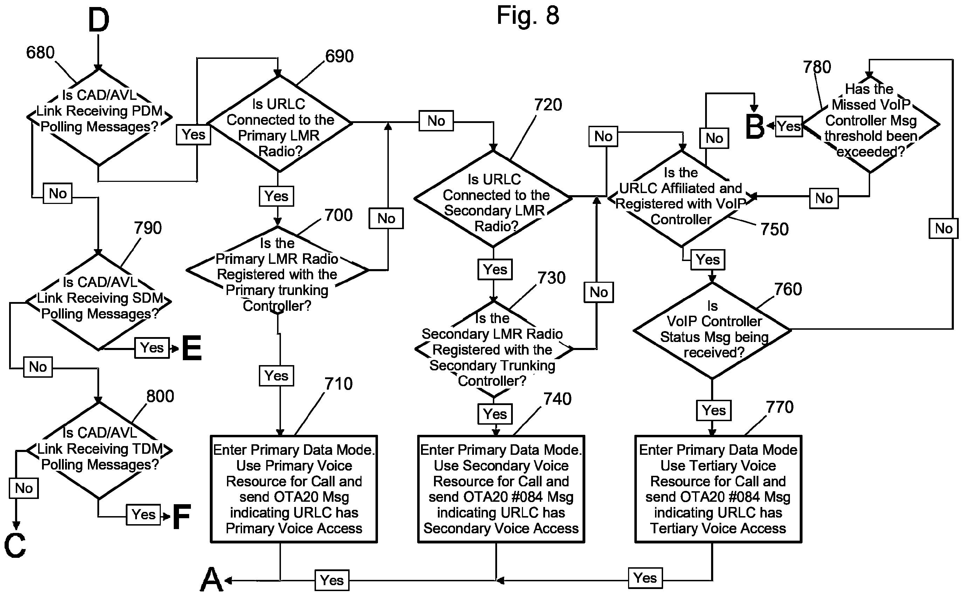

If the CAD/AVL link is running in step **560,** and the URLC does not receive a command to fallback at step **570,** the system moves to step **680** (on Figure 8) where the system determines if the CAD/AVL link is receiving PDM polling messages (also called a VoIP status signal). If the primary data mode (PDM) polling messages are received, the system moves to step **690** where the system determines if the URLC is connected to the primary LMR radio. This check may include determining if a first LMR status signal has been received from the primary land mobile radio. If so, the system then proceeds to a check in step **700** if the primary LMR radio is registered with the trunking controller. If registered, the system moves to step **710** where the system enters (or stays in) the primary data mode (PDM) using the primary voice resource, and the URLC sends a message indicating that it has primary voice resource access. This mode may be referred to as the first primary operational state. The states of the system (e.g., the first primary operational state) are applicable to both the mobile devices and/or the VoIP controller.

When the system is fully operational, it is expected the system to loop through steps **560** to **570** to **680** to **690** to **700** to **710** and back again at regular intervals (such as once a minute). Although not shown in the flow diagrams of figures 7 through 10, it expected that delay timers may be included in the flow to regulate how often the system checks the viability of the various fallback modes. The mobile device is configured to verify receipt of the VoIP status signal from the controller at the expiration of a timer having a duration (such as 30 seconds).

As another option, in step **570** the NO path to step **680** may be triggered after an alternative path **575** has been triggered a set number of times, such as 512, 1024, or 2048, or may continue on following the alternate path **575** until a timer (such as a 30 second timer) has expired. The alternative path **575** may include a time delay, such as 20 milliseconds.

If either of the checks in steps **690** or **700** is negative, the system moves to step **720** where the system determines if the URLC is connected to the second LMR system. This step may include determining if a second LMR status signal has been received from the second land mobile radio system. If so, the system then proceeds to a check in step **730** if the secondary LMR radio is registered with the trunking controller. If registered, the system moves to step **740** where the system enters the primary data mode - which may also be called the secondary primary operational state - using the secondary voice resource and the URLC (i.e., the mobile device) sends a message to the VoIP controller upon the transition from the first primary operational state to the secondary primary operational state indicating that it has secondary voice access (such as voice access through the second LMR system). This mode may be referred to as the second primary operational state. It is expected that the VoIP controller failing to receive the LMR status message (or status signal associated with a first land mobile radio system) from the mobile device in step **690** will often result in the system entering the second primary operational state. Once in the second primary operational state, the VoIP controller would transition to the second fallback state upon failing to receive the first VoIP heartbeat signal from the mobile device.

If the system has been in the second primary operational state and step **690** is found to be affirmative (e.g., LMR status signals now received) the system will often transition from the second primary operational state back to the first primary operational state. In both the modes entered in steps **710** and **740,** the mobile device is configured to provide VoIP communications over a cellular communications system. VoIP communications include transmission of voice communications using internet protocol transmission of data.

If either of the checks in steps **720** or **730** is negative, the system moves to step **750** where the system determines if the URLC is affiliated with and registered with a VoIP controller. If so, the system proceeds to step **760** where a check is made for whether VoIP controller status messages are being received. Step **760** is similar in function to step **650.** If the check in step **760** is positive, the system moves to step **770** where the system enters the primary data mode using the tertiary voice resource and the URLC sends a message indicating that it has tertiary voice access.

If no VoIP controller status messages are received in step **760,** the system proceeds to step 780 where a counter determines if the number, or duration, of missed VoIP controller messages has exceeded a predetermined threshold. This step is similar in structure to step **670.** If the threshold has not been exceeded, the step loops back to step **750** to check for VoIP controller registration and status messages in step **760.** If the missed message threshold is exceeded in step **780,** or the URLC is no longer affiliated with a controller in step **750,** the system reverts to step **560.**

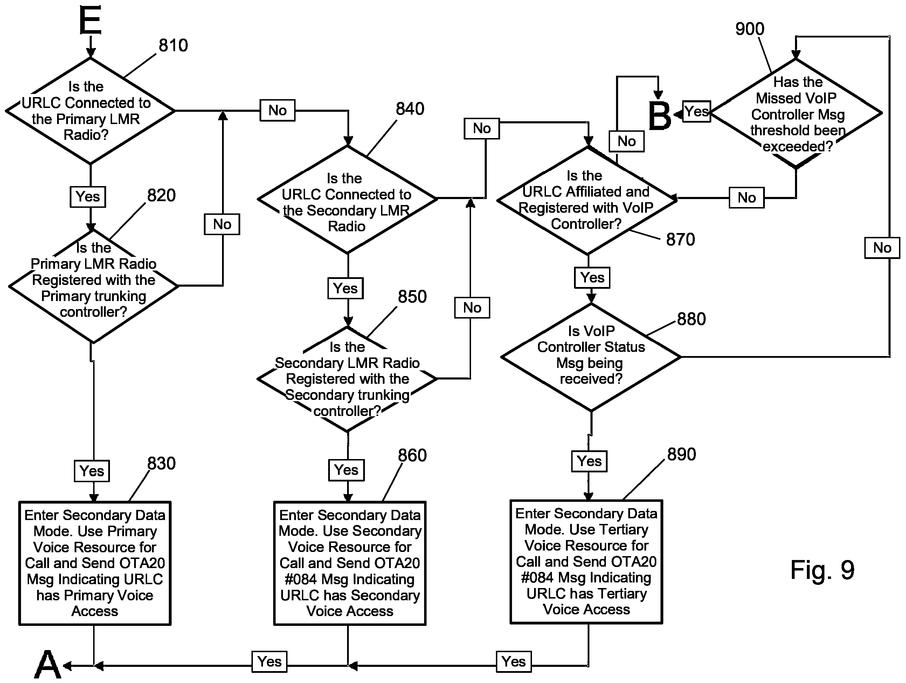

If at step **680,** no PDM polling messages are received, the system moves to step **790** where a check for secondary data mode (SDM) polling messages is made. If SDM messages are detected from the VoIP controller, the system enters an auxiliary data state - which may also be here denoted as a first auxiliary data state - through the sequences (e.g., **810** to **820** to **830**) shown in Figure 9, but if no SDM messages are indicated then a check for tertiary data mode (TDM) polling messages is made in step **800.** SDM polling messages are also called auxiliary data status signals. If TDM messages from the VoIP controller are detected, the system enters the sequences shown in Figure 9, but if no TDM messages are detected then the system loops back to step **580.** The SDM and TDM polling messages are sent through the auxiliary data communications system(s). In one embodiment, the primary data communications system is a 5G NR network, and the auxiliary data communications system is a 3G network. The primary and auxiliary data communications system may include a network pairing that include two of the following 3G network, 4G network, GSM, LTE, CDMA, and 5G NR. The primary and auxiliary data both communications system provide VoIP communications.

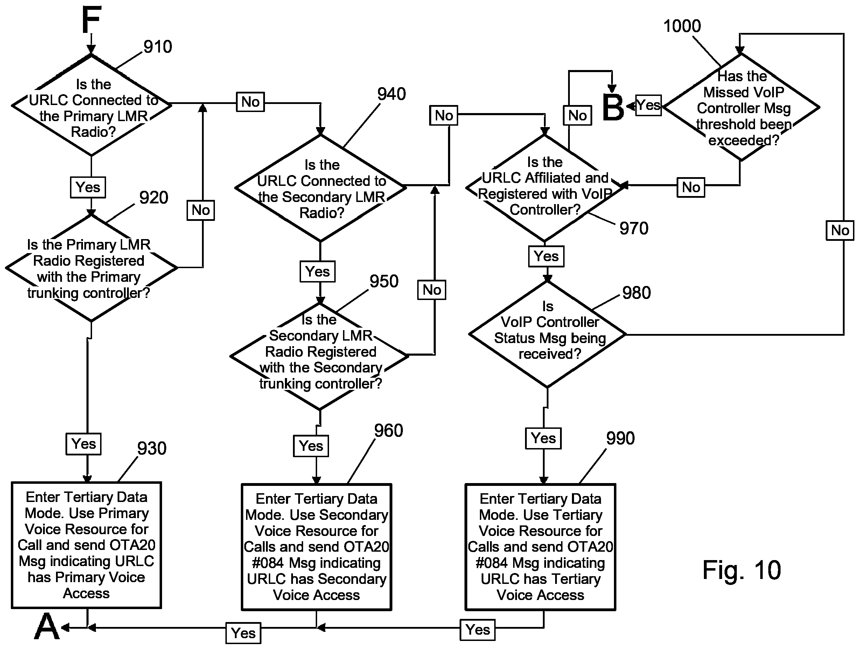

The sequences shown in figures 9 and 10 are like those shown in steps **690** through **780.** Like in step **690,** in steps **810** and **910** where the system determines if the URLC is connected to the primary LMR radio. This check may include determining first LMR status signal has been received from the primary land mobile radio. If so, the system then proceeds to a check in steps **820** or **920** if the primary LMR radio is registered with the primary trunking controller. If registered, the system moves to steps **830** or **930** where the system enters the secondary data mode (SDM) in step **830** or tertiary data mode (TDM) in step **930** using the primary voice resource, and the URLC sends a message indicating that it has primary voice resource access. The secondary data mode is also called the auxiliary data state.

If either of the checks in steps **810** or **820** is negative, the system moves to step 840 where the system determines if the URLC is connected to the secondary LMR radio. If either of the checks in steps **910** or **920** is negative, the system moves to step **940** where the system determines if the URLC is connected to the secondary LMR radio (also called the second land mobile radio system). If so, the system then proceeds to a check in steps **850** or **950** if the secondary LMR radio is registered with the trunking controller. If registered, the system moves to steps **860** or **960** where the system enters the (secondary/tertiary) data mode using the secondary voice resource and the URLC sends a message indicating that it has secondary voice access. The second data mode shown in step **860** that uses the secondary voice resource (e.g., the mobile devices uses the second land mobile radio system, receives second LMR status signals, and uses the auxiliary data communications system) is referred to as the second auxiliary data state. The second data mode shown in step **830** that uses the primary voice resource (e.g., the mobile devices uses the first land mobile radio system, receives first LMR status signals, and uses the auxiliary data communications system) is referred to as the first auxiliary data state.

If either of the checks in steps **840 / 850** or **940 /950** is negative, the system moves to steps **870** or **970** where the system determines if the URLC is affiliated with and registered with a VoIP controller. This step may include determining if a second LMR status signal has been received from the second land mobile radio. If so, the system proceeds to step **880** or **980** where a check is made for whether VoIP controller status messages are being received. Steps **880** and **980** is similar in function to step **650.** If the check in step **880** or **980** is positive, the system moves to step **890** or **990** where the system enters the secondary or tertiary, respectively, data mode using the tertiary voice resource and the URLC sends a message indicating that it has tertiary voice access.

If no VoIP controller status messages are received in steps **880** or **980,** the system proceeds to steps **900** or **1000,** respectively, where a counter determines if the number, or duration, of missed VoIP controller messages has exceeded a predetermined threshold. These steps are similar in structure to step **670.** If the threshold has not been exceeded, the step loops back to step **870** or **970** to check for VoIP controller registration and status messages in steps **880** or **980.** If the missed message threshold is exceeded in steps **900** or **1000,** or the URLC is no longer affiliated with a controller in steps **870** or **970,** the system reverts to step **560.**

After the transitions in steps **600, 630, 660, 710, 740, 770, 830, 860, 890, 930, 960,** and **990,** the system may start a timer that loops the system back to the previous steps.

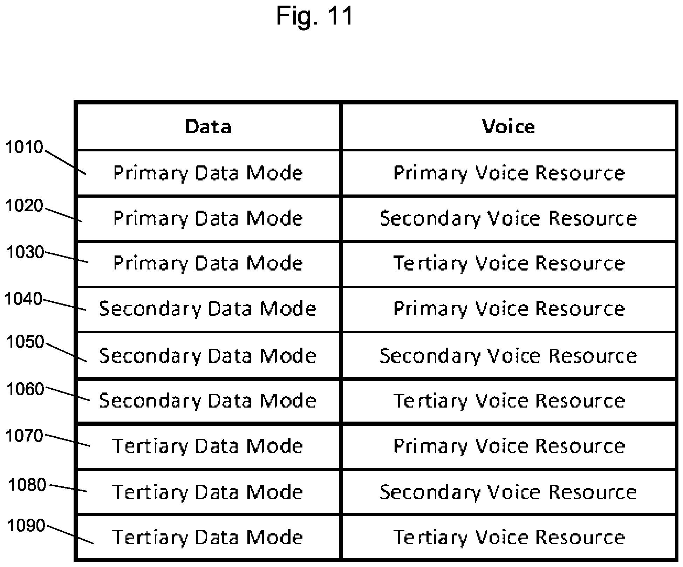

Figure 11 illustrates a database showing the various states that the system of figures 7-10 may enter based on commands or signals received, or not received. The data of Figure 5 may be stored in part of the database shown in Figure 11. This database may be stored in the VoIP database **130** or may be identical to the VoIP database **130.** In the state **1010,** (shown with identifiers Primary Data Mode / Primary Voice Mode) the data communications controller of the system is operating under a primary data mode, such as 3G or 4G cellular data, and the VoIP controller and URLC are using a primary voice resource such as land mobile radio. This state is referred to as the first primary operational state. It is generally expected that during normal operation of the system, the configuration of state **1010** will be the most used state.

In state **1020,** the primary data channel is enabled, but the secondary voice resource, such as a secondary LMR system, has been selected instead of the primary voice resource. State **1020** is referred to as the second primary operational state and is shown with identifiers Primary Data Mode / Secondary Voice Resource. State **1020** would be entered in step **740.** As an example, if the primary LMR was taken down for routine maintenance, the system would move to state **1020** as compared to state **1010** assuming that the primary data channel is still enabled. In both the first primary operational state **1010** and second primary operational state **1020,** the mobile device is associated with the cellular communications system as shown by the associated identifiers.

In state **1030,** the primary data channel is selected along with the tertiary voice method of communication. In the illustrated example shown in figure 8, the tertiary voice resource is a secondary VoIP system, however it should be appreciated the tertiary system may be a third LMR, a satellite radio system, or another type of system. In step **770,** the system enters state **1030.**

In states **1040, 1050,** and **1060,** the system has entered a secondary data mode in response to not receiving PDM polling messages through the CAD/AVL link in step **680** while also receiving SDM polling messages in step **790.** States **1040** and **1050** are referred to as the first auxiliary data state and the second first auxiliary data state, respectively. In the database the identifiers of states **1040** and **1050** (Secondary Data Mode/ Primary Voice Resource and Secondary Data Mode/ Secondary Voice Resource) associate the mobile device in both the first auxiliary data state and the second auxiliary data state with the auxiliary data communications system. The auxiliary data communications system sends and/or receives auxiliary data status signals to/from the mobile devices.

As an example, the PDM messages may be sent through a CDMA network while the SDM messages may be sent through an alternative GSM cellular network. In another embodiment, the differences between the primary data mode and the secondary data mode may be 4G versus 3G communications. The primary and secondary data modes may include a network pairing that includes two of the following 3G network, 4G network, GSM, LTE, CDMA, and 5G NR. States **1040, 1050,** and **1060** are entered through steps **830, 860,** and **890,** respectively. In addition to providing standard mobile data (e.g., internet connectivity) in the various data modes, the system also carries short message service (SMS) and multimedia messaging service (MMS) type messaging on the primary, secondary, and tertiary data modes.

In states **1070, 1080,** and **1090,** the system has entered a tertiary data mode in response to not receiving SDM polling messages through the CAD/AVL link in step **790** while also receiving TDM polling messages in step **800.** As an example, the SDM messages may be sent through a CDMA network while the TDM messages may be sent through an alternative GSM cellular network. In another embodiment, the differences between the secondary data mode and the tertiary data mode may be 3G versus 2G communications. States **1070, 1080,** and **1090** are entered through steps **930, 960,** and **990,** respectively.

The various data shown in figure 5 may be included in the VoIP controller database shown in figure 5. As an example, each device listed in figure 5 may include an indicator specifying if it is using its first fallback LMR system as the fallback or the secondary LMR system as the fallback.

### Pre-Fallback Optimization

The system may also utilize SIP/RTCP (Session Initiation Protocol/Real-Time Transport Control Protocol) that carries statistical and control data for determining when a fallback should be initiated, or if a first fallback mode should be queued for use over a second fallback mode while the system is still in its primary operating mode. In one embodiment, the SIP/RTCP measures a signal quality of the cellular communications system using a time window with early edge aligned with the delay corresponding to the earliest arriving packet and late edge representing the maximum permissible delay before a late arriving packet would be discarded. This measurement is also called the jitter buffer or jitter buffer depth. The system also uses the SIP/RTCP to gather data on the transmission related to packet loss, latency, and other measures of signal quality of the cellular communications system. The system then performs a variety of statistical measurements on the jitter buffer and other measurements (such as round-trip time) over a period of time including a sum of squares, a mean, a median, a standard deviation, and a moving average of these measurements over time. Either, or both, the mobile device or the fixed location structures may test for signal quality of the cellular communications system.

Using the information gathered from the SIP/RTCP, the system may make adjustment to further improve the operability of the system. In a first example, the system measures the average depth of the jitter buffer over time. If the 10-second moving average is more than one standard deviation above the 500-second moving average (i.e., one possible predetermined threshold) the system will decrease thresholds used in steps **670, 780,** or **900,** or path **570.** Additionally, the system may also adjust the duration of the various timers to help the system more quickly respond to further degradation of the system. The duration of the timer may be decreased upon the signal quality passing a predetermined threshold. If the jitter buffer depth then exceeds a second predetermined threshold (e.g., 10 second moving average is more than two standard deviations above the 500-second moving average) the system will fall back to an auxiliary communication mode even if the primary mode was still functionally operable (*i.e.,* the system will transition from the first primary operational state to the first fallback state when the mobile device is still receiving the VoIP status signal from the controller). In the fallback process, the VoIP controller transmits a fallback command to the mobile device upon the signal quality passing a predetermined threshold. Alternatively, the second predetermined threshold may be a percentage of packet loss instead of jitter buffer depth. The specific numbers given are for illustrative purposes, and those skilled in the art will recognize that other durations and statistical measurements may be used in the monitoring of the communication quality. For example, in one embodiment, the system may measure the jitter depth and packet loss over a 500-millisecond range. In another embodiment, the system calculates the sum of squares of the jitter buffer. In yet, another embodiment, the system maintains a database of the conditions (jitter, latency, etc.) that occurred prior to a system fallback. Based on the recorded observations, the system increases or decreases the predetermined thresholds for preemptive events (e.g., lowering predetermined thresholds used in steps **670, 780,** or **900**) to a system fallback.

In addition to utilizing the SIP/RTCP to measure transmission quality, taking steps for preemptively adjust the system in advance of an expected fallback, the SIP/RTCP may also be used to provide SSL and TLS certificate-based encryption techniques for more secure communications.

### Structure of System

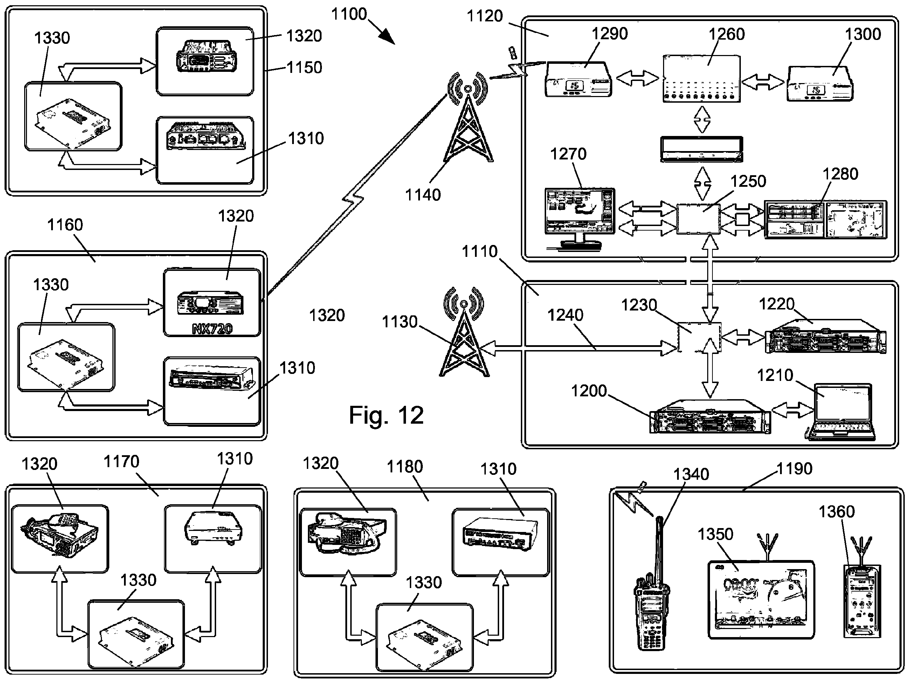

Figure 12 illustrates another non-claimed embodiment of the invention **1100** with server equipment **1110,** dispatch equipment **1120,** broadband connections **1130,** LMR radio connections **1140** of a land mobile radio system, first, second, and third fleet vehicles (**1150, 1160,** and **1170,** respectively), remote telemetry **1180,** and other vehicle or portable devices **1190.**

The server equipment **1110** includes a VoIP controller **1200** that is accessed through an NMS terminal **1210.** The server equipment **1110** also includes a CAD server **1220** and a firewall **1230** through which the server equipment connects with the broadband connections **1130** and the dispatch equipment **1120.** There is an access point name (APN) connection **1240** between the server firewall **1230** and the broadband connections **1130** of a cellular communications system.

The dispatch equipment **1120** has a dispatch firewall **1250** connected to an RoIP Rack **1260.** Dispatch radio consoles **1270** and CAD/AVL workstations **1280** are used for accessing the system. The RoIP Rack **1260** sends signals to both the LMR system's equipment **1290** (routers, switches, etc.) and any emergency mutual aid channels **1300.** The equipment of the LMR system **1290** transmits via the LMR radio system **1140.**

Each of the three fleet vehicles (**1150, 1160,** and **1170**) and remote telemetry **1180** receives communications from the broadband connection **1130** through a cellular router **1310** such as the Cradlepoint IBR1100, the Digital Transport WR44, or the Digital Transport WR21, or the Sierra Wireless MG90. Each of the three fleet vehicles (**1150, 1160,** and **1170**) and remote telemetry **1180** also receives communications from the LMR radio system **1140** via radios **1320** such as the Harris M7300, the Motorola APX 4500, the Kenwood NX-720, or the PowerTrunk MDT-400. The cellular router **1310** and the radios **1320** communicate with an onboard URLC **1330** having functionality previously described. In addition to communicating with the fleet vehicles (**1150, 1160,** and **1170**) and the remote telemetry **1180,** the system is also able to communicate with other devices such as LMR portable radios **1340,** mobile devices with cellular connections **1350,** and dual mode devices **1360** that are able to connect via LMR and cellular such as the Motorola Lex L11. The cellular router **1310,** the radios **1320,** and the onboard URLC **1330,** the LMR portable radios 1340, the mobile devices with cellular connections 1350 and the dual mode devices 1360 are also referred to as mobile devices.

In addition to the features previously discussed, numerous other features may be incorporated into the hardened VoIP system. For example, an authentication subsystem may be used to validate that a device is allowed to access the hardened VoIP infrastructure, and an authorization subsystem may be used to ensure that a user and a user's password for the system are valid. Numerous accounting/billing schemes may be utilized by a variety of agencies or groups. For example, a taxi dispatch system may purchase a hardened VoIP system while offsetting a portion of the cost by selling talk group functionality to other organizations or even individuals.

Numerous agencies (fire, police, EMT, etc.) of a municipality may be supported by a single system, and the talk group trunking functionality may be utilized to allow the various agencies to share communications lines without interfering with each other. The system may include encryption functionality that provides various levels of encryption to ensure user compliance with privacy, local, state, and federal regulations. A Network Management Subsystem client may also be used that allows for the addition, deletion, and editing of system parameters such as system IDs, talk groups, agencies, usernames, device IDs and passwords. The system may be configured to allow two users to converse or text without the rest of the user group hearing the conversation, a private call feature may be implemented to allow communications between two users rather than being broadcast to the active registered talk group users.

## Claims

1. A mobile device [280, 285, 290, 295, 300, 1310, 1320, 1330], the mobile device configured to receive via a cellular communications system [155 / 1130]
a VoIP status signal [step 680] from a VoIP controller [125, 1200],
**characterized in that**,
the mobile device having a first primary operational state [710], a second primary operational state [740], a first fallback state [600], and a second fallback state [step 630],
the mobile device configured
in the first primary operational state [710] to
receive via the cellular communications system [155 / 1130]
the VoIP status signal [step 680] from the VoIP controller [125, 1200],
receive from a first land mobile radio system [215-260 / 1290/ 1140, 690]
a first Land Mobile Radio, LMR, status signal [690], and
provide VoIP communication over the cellular communications system;
in the second primary operational state [step 740] to
receive via the cellular communications system
the VoIP status [step 680] signal from the VoIP controller [125, 1200],
receive from a second land mobile radio system [step 720]
a second LMR status signal [step 720], and
provide VoIP communication over the cellular communications system;
in the first fallback state [step 600] to
provide voice communication over the first land mobile radio system;
in the second fallback state [step 630] to
provide voice communication over the second land mobile radio system; and
to transition from the first primary operational state [710] to the first fallback state upon failing to receive the VoIP status signal from the VoIP controller [560 **→** 580 **→** 590 **→** 600];
to transition from the second primary operational state to the second fallback state upon failing to receive the VoIP status signal from the VoIP controller [560 **→** 580 **→** 610 **→** 620 → 630]; and
to transition from the first primary operational state [710] to the second primary operational state upon failing to receive the first LMR status signal [560 **→** 570 **→** 680 **→** 690**→** 720**→** 730**→** 740].

2. The mobile device of claim 1 wherein the mobile device is configured in the first primary operational state [710] to receive from the second land mobile radio system the second LMR status signal.

3. The mobile device of claim 1 wherein the mobile device is configured to transition from the second primary operational state [740] to the first primary operational state [710] upon receiving the first LMR status signal [740**→**555**→**560**→**570**→**680**→**690**→**700**→**710].

4. The mobile device of claim 1 wherein
the mobile device is configured
in the first primary operational state [710] to
receive the first LMR status signal following a verification of receipt of the VoIP status signal from the VoIP controller [680**→**690**→**700], and
in the second primary operational state [740] to
receive the second LMR status signal following the verification of receipt of the VoIP status signal from the VoIP controller [680**→**690**→**720**→**730].

5. The mobile device of claim 1 wherein
the mobile device is configured to
determine a signal quality of the cellular communications system with a Session Initiation Protocol/Real-Time Transport Control Protocol, and
transition from the first primary operational state [710] to the first fallback state upon the signal quality of the cellular communications system passing a predetermined threshold.

6. The mobile device of claim 5 wherein the predetermined threshold is a threshold of at least one of packet loss, latency, and jitter buffer depth.

7. The mobile device of claim 5 wherein
the mobile device is configured to
transition from the first primary operational state to the first fallback state upon the signal quality passing the predetermined threshold when the mobile device is receiving the VoIP status signal from the VoIP controller.

8. The mobile device of claim 1 wherein
the mobile device further includes a first auxiliary data state [830] and a second auxiliary data state [860];
the mobile device configured
in the first auxiliary data state to
receive via an auxiliary data communications system
an auxiliary data status signal from the VoIP controller,
receive from the first land mobile radio system
the first LMR status signal, and
provide VoIP communication over the auxiliary data communications system;
in the second auxiliary data state to
receive via the auxiliary data communications system
the auxiliary data status signal from the VoIP controller,
receive from the second land mobile radio system
the second LMR status signal, and
provide VoIP communication over the auxiliary data communications system;
to transition from the first auxiliary data state to the first fallback state upon failing to receive the auxiliary data status signal from the VoIP controller [steps 830**→**560**→**580**→**590**→**600];
to transition from second auxiliary data state to the second fallback state upon failing to receive the auxiliary data status signal from the VoIP controller [860**→**560**→**580**→**610**→**620**→**630]; and
to transition from the first auxiliary data state to the second auxiliary data state upon failing to receive the first LMR status signal [830**→**560**→**570**→**680**→**790**→**810**→**840**→**850**→**860].

9. The mobile device of claim 8 wherein
the mobile device is further configured
to transition from the first primary operational state to first auxiliary data state upon failing to receive the VoIP status signal and receiving the auxiliary data status signal [560**→**570**→**680**→**790**→**810**→**820**→**830]; and
to transition from the first primary operational state to first fallback state upon failing to receive the VoIP status signal and failing to receive the auxiliary data status signal [560**→**570**→**680**→**790**→**800**→**580**→**590**→**600].

10. A system for providing hardened VoIP and land mobile radio communication services to mobile devices, the system comprising the mobile device of claim 1.

11. The system of claim 10 wherein the system comprises the VoIP controller,
wherein the VoIP controller [125] is configured to maintain a VoIP database [130],
the VoIP database having identifiers
associating the mobile device in both the first primary operational state and second primary operational state with the cellular communications system, and
associating the mobile device in both the first auxiliary data state and the second auxiliary data state with the auxiliary data communications system.

12. The system of claim 11 wherein
the cellular communications system and auxiliary data communications system include a network pairing selected from a group consisting of two of 3G, 4G, GSM, LTE, CDMA, and 5G NR.

13. The system of claim 11 wherein
the VoIP controller is configured to
determine a signal quality of the cellular communications system with a Session Initiation Protocol/Real-Time Transport Control Protocol, and
transmit a fallback command to the mobile device upon the signal quality passing a predetermined threshold.

14. The system of claim 13 wherein
the mobile device is configured to transition from the first primary operational state to the first fallback state upon receipt of the fallback command from the VoIP controller.

15. The system of claim 13 wherein
the system is configured to utilize a measurement of at least one of packet loss and latency in determining the signal quality.

16. The system of claim 11 wherein
the mobile device is configured to verify receipt of the VoIP status signal from the VoIP controller at the expiration of a timer having a duration;
at least one of the VoIP controller and the mobile device is configured to determine a signal quality of the cellular communications system with a Session Initiation Protocol/Real-Time Transport Control Protocol; and
the duration of the timer decreases upon the signal quality passing a predetermined threshold.

17. The system of claim 10 wherein
the mobile device is configured to transmit a message to the VoIP controller upon
the transition from the first primary operational state to the second primary operational state indicating the mobile device has secondary voice access [step 740].

18. A VoIP controller, the VoIP controller configured to transmit a first status control signal to a first mobile device,
**characterized in that**,
the VoIP controller having a first primary operational state [710], a second primary operational state [740], a first fallback state [600], and a second fallback state [630],
the VoIP controller [125, 1200] configured
in the first primary operational state [710] to
receive via a cellular communications system [155 / 1130]
a first VoIP heartbeat signal from the first mobile device [280, 285, 290, 295, 300, 1310, 1320, 1330],
receive a first Land Mobile Radio, LMR, status signal associated with a first land mobile radio system [215-260 / 1290/ 1140, 690] from the mobile device,
maintain a database [130] with
a first identifier [475, 480] associating the first mobile device with the cellular communications system and
a second identifier [495, 500] associating the first mobile device with the first land mobile radio system;
in the second primary operational state [740] to
receive via the cellular communications system
the first VoIP heartbeat signal from the first mobile device,
receive a second LMR status signal associated with a second land mobile radio system from the mobile device,
maintain the database [130] with
the first identifier associating the first mobile device with the cellular communications system and
the second identifier associating the first mobile device with the second land mobile radio system;
in the second primary operational state to
receive via a cellular communications system
the first VoIP heartbeat signal from the mobile device,
receive via a second land mobile radio system
a second LMR status signal,
transmit the first status control signal to the mobile device, and
maintain the database [130] with
the first identifier associating the first mobile device with the cellular communications system and
a third identifier associating the first mobile device with the second land mobile radio system;
in the first fallback state to
monitor a channel of the first land mobile radio system associated with the mobile device;
in the second fallback state to
monitor a channel of the second land mobile radio system associated with the mobile device;
to transition from the first primary operational state to the first fallback state upon failing to receive the first VoIP heartbeat signal from the mobile device; and
to transition from the second primary operational state to the second fallback state upon failing to receive the first VoIP heartbeat signal from the mobile device.

19. The VoIP controller of claim 18 wherein
the VoIP controller is configured to determine a signal quality of the cellular communications system with a Session Initiation Protocol/Real-Time Transport Control Protocol, and transition from the first primary operational state to the first fallback state upon the signal quality passing a predetermined threshold.

## Patentansprüche

1. Mobile Vorrichtung [280, 285, 290, 295, 300, 1310, 1320, 1330], wobei die mobile Vorrichtung konfiguriert ist, Folgendes über ein zellulares Kommunikationssystem [155 / 1130] zu empfangen
ein VoIP-Statussignal [Schritt 680] von einer VoIP-Steuereinrichtung [125, 1200],
**dadurch gekennzeichnet, dass**
die mobile Vorrichtung einen ersten primären Betriebszustand [710], einen zweiten primären Betriebszustand [740], einen ersten Fallback-Zustand [600] und einen zweiten Fallback-Zustand [Schritt 630] aufweist,
die mobile Vorrichtung für Folgendes konfiguriert ist
in dem ersten primären Betriebszustand [710],
Empfangen, über das zellulare Kommunikationssystem [155 / 1130],
des VoIP-Statussignals [Schritt 680] von der VoIP-Steuereinrichtung [125, 1200],
Empfangen, von einem ersten Land-Mobile-Radio-System [215-260 / 1290 / 1140, 690],
eines ersten LMR(Land Mobile Radio)-Statussignals [690], und
Bereitstellen einer VoIP-Kommunikation über das zellulare Kommunikationssystem;
in dem zweiten primären Betriebszustand [Schritt 740],
Empfangen, über das zellulare Kommunikationssystem,
des VoIP-Statussignals [Schritt 680] von der VoIP-Steuereinrichtung [125, 1200],
Empfangen, von einem zweiten Land-Mobile-Radio-System [Schritt 720],
eines zweiten LMR-Statussignals [Schritt 720], und
Bereitstellen einer VoIP-Kommunikation über das zellulare Kommunikationssystem;
in dem ersten Fallback-Zustand [Schritt 600],
Bereitstellen einer Sprachkommunikation über das erste Land-Mobile-Radio-System;
in dem zweiten Fallback-Zustand [Schritt 630],
Bereitstellen einer Sprachkommunikation über das zweite Land-Mobile-Radio-System; und
bei Nichtempfangen des VoIP-Statussignals von der VoIP-Steuereinrichtung, Übergehen von dem ersten primären Betriebszustand [710] in den ersten Fallback-Zustand [560 & 580 **→** 590 **→** 600];
bei Nichtempfangen des VoIP-Statussignals von der VoIP-Steuereinrichtung, Übergehen von dem zweiten primären Betriebszustand in den zweiten Fallback-Zustand [560 **→** 580 **→** 610 **→** 620 **→** 630]; und
bei Nichtempfangen des ersten LMR-Statussignals, Übergehen von dem ersten primären Betriebszustand [710] in den zweiten primären Betriebszustand [560 **→** 570 **→** 680 **→** 690 **→** 720 **→** 730 **→** 740].

2. Mobile Vorrichtung nach Anspruch 1, wobei die mobile Vorrichtung in dem ersten primären Betriebszustand [710] konfiguriert ist, das zweite LMR-Statussignal von dem zweiten Land-Mobile-Radio-System zu empfangen.

3. Mobile Vorrichtung nach Anspruch 1, wobei die mobile Vorrichtung konfiguriert ist, bei Empfangen des ersten LMR-Statussignals, von dem zweiten primären Betriebszustand [740] in den ersten primären Betriebszustand [710] überzugehen [740 **→** 555 **→** 560 **→** 570 **→** 680 **→** 690 **→** 700 **→** 710].

4. Mobile Vorrichtung nach Anspruch 1, wobei
die mobile Vorrichtung für Folgendes konfiguriert ist
in dem ersten primären Betriebszustand [710],
Empfangen des ersten LMR-Statussignals im Anschluss an eine Bestätigung des Empfangs des VoIP-Statussignals von der VoIP-Steuereinrichtung [680 **→** 690 **→** 700], und
in dem zweiten primären Betriebszustand [740],
Empfangen des zweiten LMR-Statussignals im Anschluss an die Bestätigung des Empfangs des VoIP-Statussignals von der VoIP-Steuereinrichtung [680 **→** 690 **→** 720 **→** 730].

5. Mobile Vorrichtung nach Anspruch 1, wobei
die mobile Vorrichtung für Folgendes konfiguriert ist
Bestimmen einer Signalqualität des zellularen Kommunikationssystems mit einem Session Initiation Protocol / Real-Time Transport Control Protocol, und
wenn die Signalqualität des zellularen Kommunikationssystems einen vorgegebenen Schwellenwert übersteigt, Übergehen von dem ersten primären Betriebszustand [710] in den ersten Fallback-Zustand.

6. Mobile Vorrichtung nach Anspruch 5, wobei der vorgegebene Schwellenwert ein Schwellenwert von zumindest einem von Paketverlust, Latenz und Jitter-Puffer-Tiefe ist.

7. Mobile Vorrichtung nach Anspruch 5, wobei
die mobile Vorrichtung für Folgendes konfiguriert ist
wenn die Signalqualität den vorgegebenen Schwellenwert übersteigt, wenn die mobile Vorrichtung das VoIP-Statussignal von der VoIP-Steuereinrichtung empfängt, Übergehen von dem ersten primären Betriebszustand in den ersten Fallback-Zustand.

8. Mobile Vorrichtung nach Anspruch 1, wobei
die mobile Vorrichtung ferner einen ersten Hilfsdatenzustand [830] und einen zweiten Hilfsdatenzustand [860] beinhaltet;
die mobile Vorrichtung für Folgendes konfiguriert ist
in dem ersten Hilfsdatenzustand,
Empfangen, über ein Hilfsdaten-Kommunikationssystem,
eines Hilfsdaten-Statussignals von der VoIP-Steuereinrichtung,
Empfangen, von dem ersten Land-Mobile-Radio-System,
des ersten LMR-Statussignals, und
Bereitstellen einer VoIP-Kommunikation über das Hilfsdaten-Kommunikationssystem;
in dem zweiten Hilfsdatenzustand,
Empfangen, über das Hilfsdaten-Kommunikationssystem,
des Hilfsdaten-Statussignals von der VoIP-Steuereinrichtung,
Empfangen, von dem zweiten Land-Mobile-Radio-System,
des zweiten LMR-Statussignals, und
Bereitstellen einer VoIP-Kommunikation über das Hilfsdaten-Kommunikationssystem;
bei Nichtempfangen des Hilfsdaten-Statussignals von der VoIP-Steuereinrichtung, Übergehen von dem ersten Hilfsdatenzustand in den ersten Fallback-Zustand [Schritte 830 **→** 560 **→** 580 **→** 590 **→** 600];
bei Nichtempfangen des Hilfsdaten-Statussignals von der VoIP-Steuereinrichtung, Übergehen von dem zweiten Hilfsdatenzustand in den zweiten Fallback-Zustand [860 -+ 560 **→** 580 **→** 610 **→** 620 **→** 630]; und
bei Nichtempfangen des ersten LMR-Statussignals, Übergehen von dem ersten Hilfsdatenzustand in den zweiten Hilfsdatenzustand [830 **→** 560 **→** 570 **→** 680 **→** 790 **→** 810 **→** 840 **→** 850 **→** 860].

9. Mobile Vorrichtung nach Anspruch 8, wobei
die mobile Vorrichtung ferner für Folgendes konfiguriert ist
bei Nichtempfangen des VoIP-Statussignals und Empfangen des Hilfsdaten-Statussignals, Übergehen von dem ersten primären Betriebszustand in den ersten Hilfsdatenzustand [560 **→** 570 **→** 680 **→** 790 **→** 810 **→** 820 **→** 830]; und
bei Nichtempfangen des VoIP-Statussignals und Nichtempfangen des Hilfsdaten-Statussignals, Übergehen von dem ersten primären Betriebszustand in den ersten Fallback-Zustand [560 **→** 570 **→** 680 **→** 790 **→** 800 **→** 580 **→** 590 **→** 600].

10. System zur Bereitstellung von robusten VoIP- und Land-Mobile-Radio-Kommunikationsdiensten für mobile Vorrichtungen, wobei das System die mobile Vorrichtung nach Anspruch 1 umfasst.

11. System nach Anspruch 10, wobei das System die VoIP-Steuereinrichtung umfasst, wobei die VoIP-Steuereinrichtung [125] konfiguriert ist, eine VoIP-Datenbank [130] zu führen, wobei die VoIP-Datenbank Kennungen aufweist, die
die mobile Vorrichtung sowohl in dem ersten primären Betriebszustand als auch dem zweiten primären Betriebszustand dem zellularen Kommunikationssystem zuordnen, und
die mobile Vorrichtung sowohl in dem ersten Hilfsdatenzustand als auch dem zweiten Hilfsdatenzustand dem Hilfsdaten-Kommunikationssystem zuordnen.

12. System nach Anspruch 11, wobei
das zellulare Kommunikationssystem und das Hilfsdaten-Kommunikationssystem eine Netzwerkkopplung beinhalten, die ausgewählt ist aus einer Gruppe bestehend aus zweien von 3G, 4G, GSM, LTE, CDMA und 5G NR.

13. System nach Anspruch 11, wobei
die VoIP-Steuereinrichtung für Folgendes konfiguriert ist
Bestimmen einer Signalqualität des zellularen Kommunikationssystems mit einem Session Initiation Protocol / Real-Time Transport Control Protocol, und
wenn die Signalqualität einen vorgegebenen Schwellenwert übersteigt, Übertragen eines Fallback-Befehls an die mobile Vorrichtung.

14. System nach Anspruch 13, wobei
die mobile Vorrichtung konfiguriert ist, bei Empfang des Fallback-Befehls von der VoIP-Steuereinrichtung, von dem ersten primären Betriebszustand in den ersten Fallback-Zustand überzugehen.

15. System nach Anspruch 13, wobei
das System konfiguriert ist, beim Bestimmen der Signalqualität eine Messung von zumindest einem von Paketverlust und Latenz zu nutzen.

16. System nach Anspruch 11, wobei
die mobile Vorrichtung konfiguriert ist, zum Ablauf eines Zeitgebers, der eine Dauer aufweist, den Empfang des VoIP-Statussignals von der VoIP-Steuereinrichtung zu bestätigen;
zumindest eine von der VoIP-Steuereinrichtung und der mobilen Vorrichtung konfiguriert ist, eine Signalqualität des zellularen Kommunikationssystems mit einem Session Initiation Protocol / Real-Time Transport Control Protocol zu bestimmen; und
die Dauer des Zeitgebers abnimmt, wenn die Signalqualität einen vorgegebenen Schwellenwert übersteigt.

17. System nach Anspruch 10, wobei
die mobile Vorrichtung konfiguriert ist, beim Übergang von dem ersten primären Betriebszustand in den zweiten primären Betriebszustand eine Nachricht an die VoIP-Steuereinrichtung zu übertragen, die angibt, dass die mobile Vorrichtung einen sekundären Sprachzugang aufweist [Schritt 740].

18. VoIP-Steuereinrichtung, wobei die VoIP-Steuereinrichtung konfiguriert ist, ein erstes Statussteuersignal an eine erste mobile Vorrichtung zu übertragen,
**dadurch gekennzeichnet, dass**
die VoIP-Steuereinrichtung einen ersten primären Betriebszustand [710], einen zweiten primären Betriebszustand [740], einen ersten Fallback-Zustand [600] und einen zweiten Fallback-Zustand [630] aufweist,
die VoIP-Steuereinrichtung [125, 1200] für Folgendes konfiguriert ist
in dem ersten primären Betriebszustand [710],
Empfangen, über ein zellulares Kommunikationssystem [155 / 1130],
eines ersten VoIP-Heartbeat-Signals von der ersten mobilen Vorrichtung [280, 285, 290, 295, 300, 1310, 1320, 1330],
Empfangen eines ersten LMR(Land Mobile Radio)-Statussignals, das einem ersten Land-Mobile-Radio-System [215-260 / 1290 / 1140, 690] zugeordnet ist, von der mobilen Vorrichtung,
Führen einer Datenbank [130] mit
einer ersten Kennung [475, 480], die die erste mobile Vorrichtung dem zellularen Kommunikationssystem zuordnet, und
einer zweiten Kennung [495, 500], die die erste mobile Vorrichtung dem ersten Land-Mobile-Radio-System zuordnet;
in dem zweiten primären Betriebszustand [740],
Empfangen, über das zellulare Kommunikationssystem,
des ersten VoIP-Heartbeat-Signals von der ersten mobilen Vorrichtung,
Empfangen eines zweiten LMR-Statussignals, das einem zweiten Land-Mobile-Radio-System zugeordnet ist, von der mobilen Vorrichtung,
Führen der Datenbank [130] mit
der ersten Kennung, die die erste mobile Vorrichtung dem zellularen Kommunikationssystem zuordnet, und
der zweiten Kennung, die die erste mobile Vorrichtung dem zweiten Land-Mobile-Radio-System zuordnet;
in dem zweiten primären Betriebszustand,
Empfangen, über das zellulare Kommunikationssystem,
des ersten VoIP-Heartbeat-Signals von der mobilen Vorrichtung,
Empfangen, über ein zweites Land-Mobile-Radio-System,
eines zweiten LMR-Statussignals,
Übertragen des ersten Statussteuersignals an die mobile Vorrichtung, und
Führen der Datenbank [130] mit
der ersten Kennung, die die erste mobile Vorrichtung dem zellularen Kommunikationssystem zuordnet, und
einer dritten Kennung, die die erste mobile Vorrichtung dem zweiten Land-Mobile-Radio-System zuordnet;
in dem ersten Fallback-Zustand,
Überwachen eines Kanals des ersten Land-Mobile-Radio-Systems, der der mobilen Vorrichtung zugeordnet ist;
in dem zweiten Fallback-Zustand,
Überwachen eines Kanals des zweiten Land-Mobile-Radio-Systems, der der mobilen Vorrichtung zugeordnet ist;
bei Nichtempfangen des ersten VoIP-Heartbeat-Signals von der mobilen Vorrichtung, Übergehen von dem ersten primären Betriebszustand in den ersten Fallback-Zustand; und
bei Nichtempfangen des ersten VoIP-Heartbeat-Signals von der mobilen Vorrichtung, Übergehen von dem zweiten primären Betriebszustand in den zweiten Fallback-Zustand.

19. VoIP-Steuereinrichtung nach Anspruch 18, wobei
die VoIP-Steuereinrichtung konfiguriert ist, eine Signalqualität des zellularen Kommunikationssystems mit einem Session Initiation Protocol / Real-Time Transport Control Protocol zu bestimmen und, wenn die Signalqualität einen vorgegebenen Schwellenwert übersteigt, von dem ersten primären Betriebszustand in den ersten Fallback-Zustand überzugehen.

## Revendications

1. Dispositif mobile [280, 285, 290, 295, 300, 1310, 1320, 1330], le dispositif mobile étant configuré pour recevoir via un système de communication cellulaire [155 / 1130]
un signal de statut VoIP [étape 680] depuis un dispositif de commande VoIP [125, 1200],
**caractérisé en ce que**
le dispositif mobile comporte un premier état opérationnel primaire [710], un deuxième état opérationnel primaire [740], un premier état de repli [600] et un deuxième état de repli [étape 630],
le dispositif mobile est configuré
dans le premier état opérationnel primaire [710] pour
recevoir via le système de communication cellulaire [155 / 1130]
le signal de statut VoIP [étape 680] depuis le dispositif de commande VoIP [125, 1200],
recevoir depuis un premier système radio mobile terrestre [215-260 / 1290 / 1140, 690]
un premier signal de statut radio mobile terrestre, LMR, [690], et
fournir une communication VoIP sur le système de communication cellulaire ;
dans le deuxième état opérationnel primaire [étape 740] pour
recevoir via le système de communication cellulaire
le signal de statut VoIP [étape 680] depuis le dispositif de commande VoIP [125, 1200],
recevoir depuis un deuxième système radio mobile terrestre [étape 720]
un deuxième signal de statut LMR [étape 720], et
fournir une communication VoIP sur le système de communication cellulaire ;
dans le premier état de repli [étape 600] pour
fournir une communication vocale sur le premier système radio mobile terrestre ;
dans le deuxième état de repli [étape 630] pour
fournir une communication vocale sur le deuxième système radio mobile terrestre ; et
pour transitionner du premier état opérationnel primaire [710] au premier état de repli en cas d'échec de réception du signal de statut VoIP depuis le dispositif de commande VoIP [560 → 580 → 590 → 600] ;
pour transitionner du deuxième état opérationnel primaire au deuxième état de repli en cas d'échec de réception du signal de statut VoIP depuis le dispositif de commande VoIP [560 → 580 → 610 → 620 → 630] ; et
pour transitionner du premier état opérationnel primaire [710] au deuxième état opérationnel primaire en cas d'échec de réception du premier signal de statut LMR [560 → 570 → 680 → 690 → 720 → 730 → 740].

2. Dispositif mobile selon la revendication 1, dans lequel le dispositif mobile est configuré dans le premier état opérationnel primaire [710] pour recevoir, depuis le deuxième système radio mobile terrestre, le deuxième signal de statut LMR.

3. Dispositif mobile selon la revendication 1, dans lequel le dispositif mobile est configuré pour transitionner du deuxième état opérationnel primaire [740] au premier état opérationnel primaire [710] à la réception du premier signal de statut LMR [740 → 555 → 560 → 570 → 680 → 690 → 700 → 710].

4. Dispositif mobile selon la revendication 1, dans lequel
le dispositif mobile est configuré
dans le premier état opérationnel primaire [710] pour
recevoir le premier signal de statut LMR à la suite d'une vérification de réception du signal de statut VoIP depuis le dispositif de commande VoIP [680 → 690 → 700], et
dans le deuxième état opérationnel primaire [740] pour
recevoir le deuxième signal de statut LMR à la suite de la vérification de réception du signal de statut VoIP depuis le dispositif de commande VoIP [680 → 690 → 720 → 730].

5. Dispositif mobile selon la revendication 1, dans lequel
le dispositif mobile est configuré pour
déterminer une qualité de signal du système de communication cellulaire avec un protocole d'ouverture de session/protocole de commande de transport en temps réel, et
transitionner du premier état opérationnel primaire [710] au premier état de repli dans le cas où la qualité de signal du système de communication cellulaire respecte un seuil prédéterminé.

6. Dispositif mobile selon la revendication 5, dans lequel le seuil prédéterminé est un seuil d'au moins l'une parmi une perte de paquets, une latence et une profondeur de tampon de gigue.

7. Dispositif mobile selon la revendication 5, dans lequel
le dispositif mobile est configuré pour
transitionner du premier état opérationnel primaire au premier état de repli dans le cas où la qualité de signal respecte le seuil prédéterminé lorsque le dispositif mobile reçoit le signal de statut VoIP depuis le dispositif de commande VoIP.

8. Dispositif mobile selon la revendication 1, dans lequel
le dispositif mobile inclut en outre un premier état de données auxiliaires [830] et un deuxième état de données auxiliaires [860] ;
le dispositif mobile est configuré
dans le premier état de données auxiliaires pour
recevoir via un système de communication de données auxiliaires
un signal de statut de données auxiliaires depuis le dispositif de commande VoIP,
recevoir depuis le premier système radio mobile terrestre
le premier signal de statut LMR, et
fournir la communication VoIP sur le système de communication de données auxiliaires ;
dans le deuxième état de données auxiliaires pour
recevoir via le système de communication de données auxiliaires
le signal de statut de données auxiliaires depuis le dispositif de commande VoIP,
recevoir depuis le deuxième système radio mobile terrestre
le deuxième signal de statut LMR, et
fournir une communication VoIP sur le système de communication de données auxiliaires ;
pour transitionner du premier état de données auxiliaires au premier état de repli en cas d'échec de réception du signal de statut de données auxiliaires depuis le dispositif de commande VoIP [étapes 830 → 560 → 580 → 590 → 600] ;
pour transitionner du deuxième état de données auxiliaires au deuxième état de repli en cas d'échec de réception du signal de statut de données auxiliaires depuis le dispositif de commande VoIP [860 → 560 → 580 → 610 → 620 → 630] ; et
pour transitionner du premier état de données auxiliaires au deuxième état de données auxiliaires en cas d'échec de réception du premier signal de statut LMR [830 → 560 → 570 → 680 → 790 → 810 → 840 → 850 → 860].

9. Dispositif mobile selon la revendication 8, dans lequel
le dispositif mobile est en outre configuré
pour transitionner du premier état opérationnel primaire au premier état de données auxiliaires en cas d'échec de réception du signal de statut VoIP et de réception du signal de statut de données auxiliaires [560 → 570 → 680 → 790 → 810 → 820 & 830] ; et
pour transitionner du premier état opérationnel primaire au premier état de repli en cas d'échec de réception du signal de statut VoIP et d'échec de réception du signal de statut de données auxiliaires [560 → 570 → 680 → 790 → 800 → 580 & 590 → 600].

10. Système pour fournir des services renforcés de communication radio mobile terrestre et VoIP à des dispositifs mobiles, le système comprenant le dispositif mobile selon la revendication 1.

11. Système selon la revendication 10, dans lequel le système comprend le dispositif de commande VoIP, dans lequel le dispositif de commande VoIP [125] est configuré pour maintenir une base de données VoIP [130], la base de données VoIP comportant des identifiants
associant le dispositif mobile à la fois dans le premier état opérationnel primaire et le deuxième état opérationnel primaire au système de communication cellulaire, et
associant le dispositif mobile à la fois dans le premier état de données auxiliaires et le deuxième état de données auxiliaires au système de communication de données auxiliaires.

12. Système selon la revendication 11, dans lequel
le système de communication cellulaire et le système de communication de données auxiliaires incluent un appariement de réseaux sélectionné dans un groupe se composant de deux parmi 3G, 4G, GSM, LTE, CDMA et 5G NR.

13. Système selon la revendication 11, dans lequel
le dispositif de commande VoIP est configuré pour
déterminer une qualité de signal du système de communication cellulaire avec un protocole d'ouverture de session/protocole de commande de transport en temps réel, et
transmettre une instruction de repli au dispositif mobile dans le cas où la qualité de signal respecte un seuil prédéterminé.

14. Système selon la revendication 13, dans lequel
le dispositif mobile est configuré pour transitionner du premier état opérationnel primaire au premier état de repli à la réception de l'instruction de repli depuis le dispositif de commande VoIP.

15. Système selon la revendication 13, dans lequel
le système est configuré pour utiliser une mesure d'au moins l'une parmi une perte de paquets et une latence dans la détermination de la qualité de signal.

16. Système selon la revendication 11, dans lequel
le dispositif mobile est configuré pour vérifier une réception du signal de statut VoIP depuis le dispositif de commande VoIP à l'expiration d'une temporisation ayant une durée ;
au moins l'un parmi le dispositif de commande VoIP et le dispositif mobile est configuré pour déterminer une qualité de signal du système de communication cellulaire avec un protocole d'ouverture de session/protocole de commande de transport en temps réel ; et
la durée de la temporisation diminue dans le cas où la qualité de signal respecte un seuil prédéterminé.

17. Système selon la revendication 10, dans lequel
le dispositif mobile est configuré pour transmettre un message au dispositif de commande VoIP en cas de transition du premier état opérationnel primaire au deuxième état opérationnel primaire indiquant que le dispositif mobile a un accès vocal secondaire [étape 740].

18. Dispositif de commande VoIP, le dispositif de commande VoIP étant configuré pour transmettre un premier signal de commande de statut à un premier dispositif mobile,
**caractérisé en ce que**
le dispositif de commande VoIP comporte un premier état opérationnel primaire [710], un deuxième état opérationnel primaire [740], un premier état de repli [600] et un deuxième état de repli [630],
le dispositif de commande VoIP [125, 1200] est configuré
dans le premier état opérationnel primaire [710] pour
recevoir via un système de communication cellulaire [155 / 1130]
un premier signal de pouls VoIP depuis le premier dispositif mobile [280, 285, 290, 295, 300, 1310, 1320, 1330],
recevoir un premier signal de statut radio mobile terrestre, LMR, associé à un premier système radio mobile terrestre [215-260 / 1290 / 1140, 690] depuis le dispositif mobile,
maintenir une base de données [130] avec
un premier identifiant [475, 480] associant le premier dispositif mobile au système de communication cellulaire et
un deuxième identifiant [495, 500] associant le premier dispositif mobile au premier système radio mobile terrestre ;
dans le deuxième état opérationnel primaire [740] pour
recevoir via le système de communication cellulaire
le premier signal de pouls VoIP depuis le premier dispositif mobile,
recevoir un deuxième signal de statut LMR associé à un deuxième système radio mobile terrestre depuis le dispositif mobile,
maintenir la base de données [130] avec
le premier identifiant associant le premier dispositif mobile au système de communication cellulaire et
le deuxième identifiant associant le premier dispositif mobile au deuxième système radio mobile terrestre ;
dans le deuxième état opérationnel primaire pour
recevoir via un système de communication cellulaire
le premier signal de pouls VoIP depuis le dispositif mobile,
recevoir via un deuxième système radio mobile terrestre un deuxième signal de statut LMR,
transmettre le premier signal de commande de statut au dispositif mobile, et
maintenir la base de données [130] avec
le premier identifiant associant le premier dispositif mobile au système de communication cellulaire et
un troisième identifiant associant le premier dispositif mobile au deuxième système radio mobile terrestre ;
dans le premier état de repli pour
surveiller un canal du premier système radio mobile terrestre associé au dispositif mobile ;
dans le deuxième état de repli pour
surveiller un canal du deuxième système radio mobile terrestre associé au dispositif mobile ;
pour transitionner du premier état opérationnel primaire au premier état de repli en cas d'échec de réception du premier signal de pouls VoIP depuis le dispositif mobile ; et
pour transitionner du deuxième état opérationnel primaire au deuxième état de repli en cas d'échec de réception du premier signal de pouls VoIP depuis le dispositif mobile.

19. Dispositif de commande VoIP selon la revendication 18, dans lequel
le dispositif de commande VoIP est configuré pour déterminer une qualité de signal du système de communication cellulaire avec un protocole d'ouverture de session/protocole de commande de transport en temps réel, et transitionner du premier état opérationnel primaire au premier état de repli dans le cas où la qualité de signal respecte un seuil prédéterminé.
